# NEUE EUROPÄISCHE PATENTSCHRIFT

(11) **EP 3 257 100 B2**
(45) Veröffentlichungstag und Bekanntmachung des Hinweises auf die Entscheidung über den Einspruch: **14.02.2024**
(45) Hinweis auf die Patenterteilung: 31.03.2021
(21) Anmeldenummer: 17711591.2
(22) Anmeldetag: 09.03.2017
(51) Int. Cl.: H01P 3/123, B61L 3/22, H01Q 1/32, H01Q 1/42

(54) **DATENÜBERTRAGUNGSVORRICHTUNG, SCHLEIFLEITUNG UND SCHLEIFLEITUNGSSYSTEM**
DATA TRANSMISSION DEVICE, CONDUCTOR LINE, AND CONDUCTOR LINE SYSTEM
DISPOSITIF DE TRANSMISSION DE DONNÉES, LIGNE DE BOUCLE ET SYSTÈME DE BOUCLE

(30) Priorität: 06.05.2016 DE 102016108442
(43) Veröffentlichungstag der Anmeldung: 20.12.2017
(73) Patentinhaber: Conductix-Wampfler GmbH, 79576 Weil am Rhein-Märkt (DE)
(72) Erfinder: ECKLE, Michael, 79379 Müllheim (DE)
(74) Vertreter: Charrier Rapp & Liebau
(86) Internationale Anmeldenummer: PCT/EP2017/055586
(87) Internationale Veröffentlichungsnummer: WO 2017/190877

(56) Entgegenhaltungen:
- WO-A1-2015/140036
- DE-A1- 10 219 452
- DE-U1-202014 102 490
- US-A1- 2013 227 852

## Beschreibung

Die Erfindung betrifft eine Datenübertragungsvorrichtung nach dem Oberbegriff des Anspruchs 1, 2 oder 3, eine Schleifleitung nach dem Oberbegriff des Anspruchs 9 und ein Schleifleitungssystem.

Bei bekannten Schleifleitungssystemen fährt ein verfahrbarer elektrischer Verbraucher, entlang einer Schleifleitung. Zur Versorgung des Verbrauchers mit elektrischer Energie ist dieser mit einem Stromabnehmer ausgestattet, dessen Schleifkontakte in längs der Schleifleitung geführte Leiterstränge eingreifen. Der Verbraucher kann z.B. ein Transportgehänge einer Schienenhängebahn, ein auf Schienen verfahrbarer Leitungswagen oder auch sog. E-RTG-Containerkräne sein, welche mit einem elektrischen Fahrantrieb ausgerüstet sind, der von der Schleifleitung mit elektrischer Energie versorgt wird.

Um Daten auf den Verbraucher übertragen zu können, z. B. Steuerdaten, werden bei bekannten Schleifleitungssystemen u. a. parallel zu den Leitersträngen der Schleifleitung geführte Schlitzhohlleiter verwendet, in die am Verbraucher angeordnete Antennen eingreifen.

Ein solches Schleifleitungssystem offenbart die DE 10 2011 119 351 A1, wo seitlich an einem Doppel-T-Träger mit ihren Öffnungen seitlich nach außen weisenden stromführenden Leiterstränge angeordnet sind. Weiter ist dort ebenfalls ein Schlitzhohlleiter angeordnet, dessen Längsschlitz seitlich nach außen weist, so dass Schmutz und insbesondere Regenwasser relativ leicht von der Seite in den Längsschlitz eindringen kann und sich insbesondere auf der unteren, waagrechten Schlitzfläche ablagert.

Bei dem in der DE 10 2012 002 085 A1 offenbarten Schlitzhohlleiter weist der Längsschlitz ebenfalls zur Seite. Um vor allem das Eindringen Regenwasser von schräg oben in den Längsschlitz zu vermeiden, ist dort jedoch an der oberen Wandung des Längsschlitzes ein zweimal um 45° abgewinkeltes Umlenkteil vorgesehen, so dass die Öffnung des Längsschlitzes nach dem Umlenkteil senkrecht nach unten gerichtet ist. Die Antenne des Schienenfahrzeugs greift dabei senkrecht von unten in den Längsschlitz ein, so dass die elektromagnetischen Wellen aus dem T-förmigen Hohlraumprofil des Schlitzhohlleiters mittels des Umlenkteils nach unten zum Längsschlitz abgelenkt werden müssen. Dies ist aufgrund der Unsymmetrie des abgewinkelten Längsschlitzes sowie des längeren Übertragungswegs der Wellen im Gegensatz zu einem geraden Längsschlitz nachteilig für die Datenübertragung.

Dies wird bei der in der DE 10 2004 008 571 A1 offenbarten, als Doppel-T-Träger ausgebildeten Tragschiene mit seitlich daran angeordneten Leitersträngen dadurch vermieden, dass ein Schlitzhohlleiter im Fußteil des Doppel-T-Trägers angeordnet ist und der Längsschlitz des Schlitzhohlleiters senkrecht nach unten mündet. An der Antenne anhaftender Schmutz und von unten aufgewirbelter Schmutz, wie es besonders im Bereich der E-RTG-Containerkräne der Fall ist, dringt dort jedoch weiter ungehindert durch den Längsschlitz in den Schlitzhohlleiter. Da solche E-RTG-Containerkräne bevorzugt in Häfen mit feuchter, salzhaltiger Luft eingesetzt werden, dringt dort auch die aufsteigende Feuchtigkeit ungehindert in den Schlitzhohlleiter ein und führt dort zur schnellen Korrosion und stört die Datenübertragung, insbesondere aufgrund der sich auf den Innenwandungen des Schlitzhohlleiters niederschlagenden Feuchtigkeit.

Die DE 25 559 09 A1 löst das Problem des Eindringens von Schmutz bei einer Einrichtung zur Nachrichtenübertragung bei ortsveränderlichen Objekten, die entlang einer vorgegebenen Bewegungsbahn geführt werden, mit einer im wesentlichen parallel zur Bewegungsbahn verlaufenden Leiteranordnung, in der eine elektromagnetische Welle geführt ist und mit einem elektromagnetisch an die Leiteranordnung ankoppelnden am ortsveränderlichen Objekt angebrachten Koppelglied, wobei die Leiteranordnung ein längsgeschlitzter, rechteckförmiger Hohlleiter ist, und das Koppelglied in den Längsschlitz des Hohlleiters eintaucht, und der Rand des Längsschlitzes eine Aufbiegung aufweist, dadurch, dass ein U-förmiges Kunststoffprofil in den Hohlleiter hineinragt, der im übrigen vollständig mit einem Material mit kleiner Dielektrizitätszahl und geringen Verlusten ausgeschäumt ist. Dies ist fertigungstechnisch nachteilig, da das Ausschäumen des Hohlleiters und das Anpassen des U-förmigen Profils an die Ausschäumung zusätzlichen Aufwand bedeuten.

Die DE 20 2014 102 490 U1 löst das Problem, das durch Regen, Staub und andere äußere Einflüsse verursachte Eindringen von Schmutz zu verhindern dadurch, dass bei einer Schleifleitung zur Versorgung mindestens eines an der Schleifleitung in deren Längsrichtung verfahrbaren elektrischen Verbrauchers, mit mindestens einem in Längsrichtung verlaufenden Leiterstrang mit einem elektrisch leitenden Leiterprofil zur Kontaktierung mit einem Schleifkontakt eines Stromabnehmers des Verbrauchers und mit mindestens einem in Längsrichtung verlaufenden länglichen Schlitzhohlleiter mit einem Längsschlitz zur Aufnahme einer mit dem Verbraucher verfahrbaren Antenne, wobei der Längsschlitz gegenüber einer Verfahrebene, in welcher der Stromabnehmer in Längsrichtung verfahrbar ist, um einen Winkel ungleich 90° um die Längsrichtung gekippt ist, dadurch, dass eine obere Schlitzwandung des gekippten Längsschlitzes sowie eine daran angeordnete, nach unten abgewinkelte und verlängerte Wandung vorgesehen sind.

Die DE 10 2009 004 782 A1 offenbart eine Vorrichtung zur berührungslosen Energieübertragung, bei der der Primärleiter in einer kanalförmigen Aufnahme eines als elektromagnetische Schirmung wirkenden Trägerelements angeordnet ist und die Aufnahme durch einen flexiblen Bereich der elektromagnetischen Schirmung zur Bildung eines Faradayschen Käfigs verschlossen ist, durch welche ein Koppelmittel zur induktiven Kopplung einer beweglichen Einheit an den Primärleiter greift, wobei die bewegliche Einheit entlang eines Verfahrwegs verfahrbar ist. Um bei der Vorrichtung zur berührungslosen Energieübertragung verbesserte EMV-Eigenschaften zu erzielen, ist der Primärleiter an seinem Umfang von einer elektromagnetischen Schirmung umgeben, durch welche der Primärleiter nach außen elektromagnetisch geschirmt ist, wobei die elektromagnetische Schirmung einen flexiblen Bereich aufweist ist, der sich längs wenigstens eines Abschnitts des Verfahrwegs erstreckt, und wobei das Koppelmittel in Gebrauchslage den flexiblen Bereich in einem Teilbereich des flexiblen Bereichs durchgreift, wobei sich der flexible Bereich in dem Teilbereich an das Koppelmittel derart anpasst, dass der Primärleiter auch in dem Teilbereich durch die Schirmung nach außen geschirmt ist, wobei das Koppelmittel in Gebrauchslage mit der beweglichen Einheit längs des Abschnitts des Verfahrwegs verfahrbar ist.

Entsprechende Probleme ergeben sich auch bei anderen Datenübertragungsvorrichtungen, bei denen eine Sende- und/oder Empfangseinheit und eine Datenübertragungsvorrichtung gegeneinander beweglich sind und die Sende- und/oder Empfangseinheit ganz oder teilweise in einen Längsschlitz eines Hohlraums der Datenübertragungsvorrichtungen eingreift.

Die US 2013/0227852 A1 offenbart eine Längenmesseinrichtung mit einem Hohlprofil, in dem ein Maßstab geschützt untergebracht ist. Die Längenmesseinrichtung besteht aus den Komponenten Maßstab und Abtasteinheit, die in Längsrichtung relativ zueinander bewegbar sind. Zur Messung einer Position zweier in Längsrichtung relativ zueinander verschiebbarer Objekte wird der Maßstab an eines dieser Objekte und die Abtasteinheit an das andere dieser beiden Objekte befestigt. Die Abtasteinheit tastet bei der Positionsmessung eine Messteilung des Maßstabs ab und bildet daraus Positionsmesswerte, wobei die Markierungen auch induktiv, magnetisch oder kapazitiv abtastbar ausgestaltet sein können.

Die WO 2015/140036 A1 betrifft einen Schlitzhohlleiter, mit einem sich in Längsrichtung erstreckenden Hohlleiter zur Führung von elektromagnetischen Wellen, welcher einen zumindest bereichsweise in Längsrichtung ausgeschäumten Hohlraum aufweist, wobei der Schaum bevorzugt ein Dielektrikum mit εᵣ ungefähr gleich 1 ist. Das Ausfüllen zumindest zweier äußerer der Abschnitte des Hohlleiters bewirkt, dass diese nicht verschmutzen oder sich mit Feuchtigkeit, insbesondere Kondenswasser, füllen können.

Aufgabe der Erfindung ist es deshalb, eine Datenübertragungsvorrichtung, eine Schleifleitung und ein Schleifleitungssystem bereitzustellen, welche die oben genannten Nachteile überwinden und eine gegen Eindringen von Schmutz und Feuchtigkeit in den Hohlraum des Hohlprofils geschützte Datenübertragung zu ermöglichen.

Die Erfindung löst die Aufgabe durch eine Datenübertragungsvorrichtung mit den Merkmalen des Anspruchs 1, 2 oder 3, eine Schleifleitung mit den Merkmalen des Anspruchs 9 sowie ein Schleifleitungssystem mit den Merkmalen des Anspruchs 10. Vorteilhafte Weiterbildungen und Ausgestaltungen der Erfindung sind in den Unteransprüchen angegeben.

Eine erste erfindungsgemäße Datenübertragungsvorrichtung ist gekennzeichnet durch die Merkmale des Anspruchs 1.

Eine zweite erfindungsgemäße Datenübertragungsvorrichtung ist gekennzeichnet durch die Merkmale des Anspruchs 2.

Eine dritte erfindungsgemäße Datenübertragungsvorrichtung ist gekennzeichnet durch die Merkmale des Anspruchs 3.

Dabei sind bei der oben genannten ersten oder dritten erfindungsgemäßen Datenübertragungsvorrichtung auf einander gegenüberliegenden Seiten des Längsschlitzes jeweils ein Dichtelement an dem Hohlprofil angeordnet. Vorteilhaft können die Dichtelemente bei der obigen dritten erfindungsgemäßen Datenübertragungsvorrichtung in den Hohlraum oder zum Hohlraum hin weisen. Dabei kann bei der obigen zweiten oder dritten erfindungsgemäßen Datenübertragungsvorrichtung vorteilhaft das oder die Dichtelemente parallel zu Schlitzwandungen des Längsschlitzes in den Hohlraum hinein verlaufen.

In einer vorteilhaften Ausgestaltung der obigen zweiten erfindungsgemäßen Datenübertragungsvorrichtung kann das Dichtelement von einer Seite des Längsschlitzes in den Hohlraum und zur anderen Seite des Längsschlitzes verlaufen, so dass eine in den Längsschlitz ragende Übertragungseinheit vollständig von dem Dichtelement umgeben ist und somit der verbleibende Teil des Hohlraums vollständig gegenüber der Außenumgebung abgedichtet ist. Dabei kann das Dichtelement mindestens soweit in den Hohlraum ragen wie die in den Längsschlitz maximal eindringende Übertragungseinheit.

In einer vorteilhaften Weiterbildung der obigen dritten erfindungsgemäßen Datenübertragungsvorrichtung können die Dichtelemente jeweils an einer dem Längsschlitz gegenüberliegenden Wandung des Hohlraums anliegen.

Bevorzugt können bei der obigen zweiten erfindungsgemäßen Datenübertragungsvorrichtung das Dichtelement am Übergang zwischen Hohlraum und Längsschlitz angeordnet sein, um den Hohlraum möglichst gut gegenüber der Außenumgebung abzuschirmen.

Bevorzugt können bei der obigen zweiten oder dritten erfindungsgemäßen Datenübertragungsvorrichtung das oder die Dichtelemente als Dichtlippen oder Dichtbürsten ausgebildet sein. In einer fertigungstechnisch günstigen Ausführung kann bei der obigen zweiten erfindungsgemäßen Datenübertragungsvorrichtung das Dichtelement eine im Querschnitt stellenweise verdickte Befestigungskante zur Halterung in einer entsprechend geformten Befestigungsnut des Hohlprofils aufweisen. Dabei kann die verdickte Befestigungskante im Querschnitt kreisrund, oval, schwalbenschwanz-, trichter- oder keilförmig geformt sein.

Dabei kann bei der obigen zweiten oder dritten erfindungsgemäßen Datenübertragungsvorrichtung das längliche Hohlprofil vorteilhaft ein Schlitzhohleiter und die Übertragungseinheit eine Antenne sein.

Bei einer erfindungsgemäßen Schleifleitung wird eine oben und nachfolgend beschriebene Datenübertragungsvorrichtung verwendet.

Ein erfindungsgemäßes Schleifleitungssystem mit einer oben und nachfolgend beschriebenen Schleifleitung hat mindestens einen an der Schleifleitung in deren Längsrichtung verfahrbaren elektrischen Verbraucher, der einen Stromabnehmer mit mindestens einem Schleifkontakt zur Kontaktierung mit mindestens einem elektrischen leitenden Leiterprofil der Schleifleitung aufweist, und wobei der Verbraucher eine Übertragungseinheit zur Datenübertragung mit der Datenübertragungsvorrichtung der Schleifleitung aufweist. Vorteilhaft kann die Übertragungseinheit zumindest teilweise in den Längsschlitz des Hohlprofils eingreifen.

Die Erfindung wird nachfolgend anhand von detaillierten Ausführungsbeispielen mit Bezug auf die begleitenden Zeichnungen beschrieben. Diese zeigen:
- **Fig. 1**: eine seitliche, zum Teil aufgeschnittene Draufsicht auf einen Abschnitt eines erfindungsgemäßen Schleifleitungssystems;
- **Fig. 2**: eine stirnseitige, schnittähnliche Draufsicht auf das Schleifleitungssystems aus Fig. 1;
- **Fig. 2a**: eine Detailansicht aus Fig. 2;
- **Fig. 3**: eine Schnittansicht durch eine erste Ausführung einer erfindungsgemäßen Datenübertragungsvorrichtung des Schleifleitungssystems aus Fig. 1;
- **Fig. 4**: eine Schnittansicht durch eine zweite Ausführung einer erfindungsgemäßen Datenübertragungsvorrichtung des Schleifleitungssystems aus Fig. 1;
- **Fig. 5**: eine Schnittansicht durch eine dritte Ausführung einer erfindungsgemäßen Datenübertragungsvorrichtung des Schleifleitungssystems aus Fig. 1.

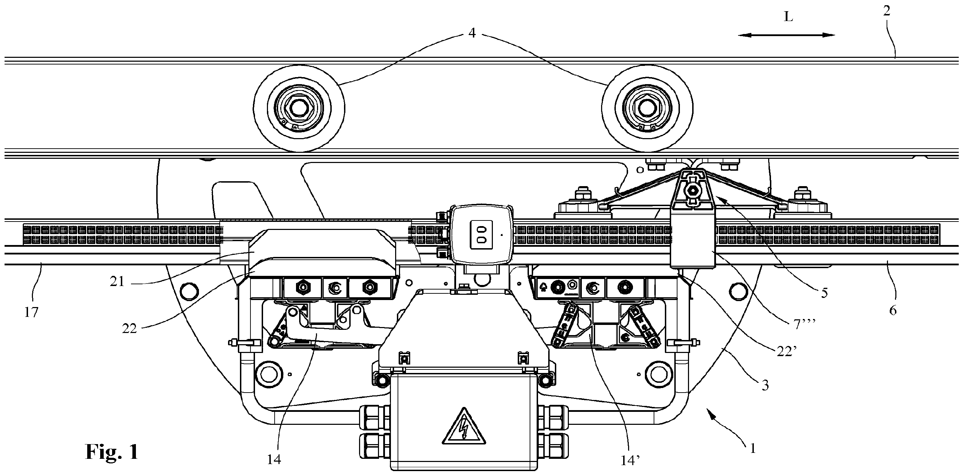

Fig. 1 zeigt eine seitliche Draufsicht auf einen Abschnitt eines erfindungsgemäßen Schleifleitungssystems 1 mit einem im Wesentlichen Doppel-U-förmigen Schienenstrang 2. An dem Schienenstrang 2 ist ein Stromabnehmer 3 eines nicht gezeichneten elektrischen Verbrauchers mit Laufrollen 4 in eine Längsrichtung L verfahrbar. Der Stromabnehmer 3 dient zur Versorgung des längs des Schienenstrangs 2 verfahrbaren elektrischen Verbrauchers, beispielsweise eines Containerkrans.

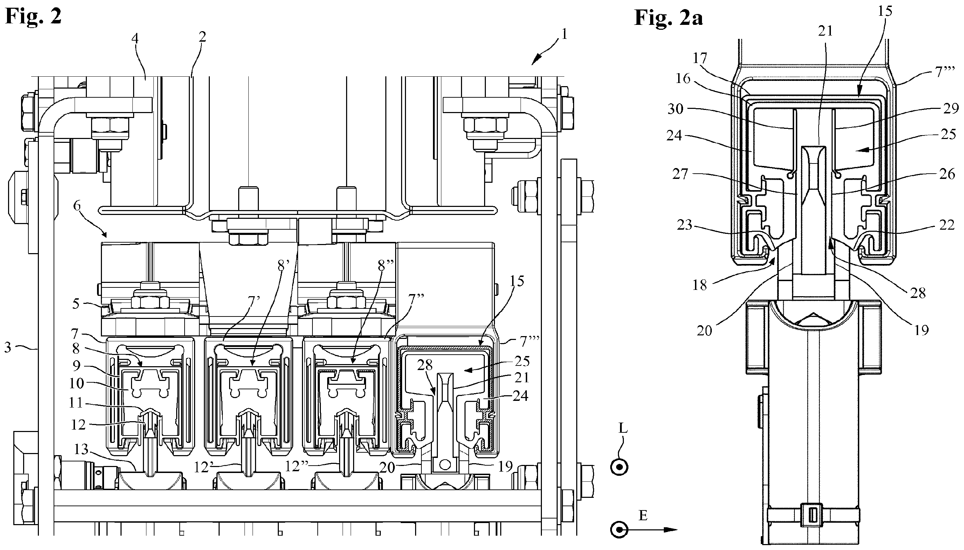

An der unteren Seite des Schienenstrangs 2 ist mittels in Längsrichtung L des Schienenstrangs 2 voneinander beabstandet angebrachten Schleifleitungshalterungen 5 eine erfindungsgemäße Schleifleitung 6 nach unten hängend angebracht. Die Schleifleitung 6 weist dabei in Fig. 2 gut erkennbar drei nebeneinander angeordnete Leiterstranghalterungen 7, 7' und 7" zur Halterung von länglichen Phasenleitersträngen 8, 8' und 8" auf. Da die Phasenleiterstränge 8' und 8" identisch zum Phasenleiterstrang 8 ausgebildet sind, gelten die zum Phasenleiterstrang 8 gemachten Ausführungen entsprechend.

Der Phasenleiterstrang 8 weist ein längliches Isolierprofil 9 auf, welches von der Leiterstranghalterung 7 gehalten wird. In das Isolierprofil 9 ist dann wiederum ein längliches, elektrisch leitendes Phasenleiterprofil 10 mit ebenfalls elektrisch leitender länglicher Schleiffläche 11, bevorzugt aus Aluminium oder Stahl, eingesetzt.

An der Schleiffläche 11 schleift ein Schleifkontakt 12, welcher an einem Schleifkontaktträger 13 des Stromabnehmers 3 angeordnet ist. Der Schleifkontaktträger 13 mit Schleifkontakt 12 kann in an sich bekannter Weise über einen in Fig. 1 exemplarisch gezeigten, an sich bekannte Zustellmechanismus 14 an die Schleiffläche 11 heran und von dieser weg bewegt werden. Im Betrieb wird der Schleifkontakt 12 ständig an die Schleiffläche 11 angedrückt, beispielsweise über Federkraft. In Fig. 2 gezeigte weitere Schleifkontakte 12' bzw. 12" mit zugehörigen Schleifkontaktträgern sind weitgehend identisch zum Schleifkontakt 12 und Schleifkontaktträger 13 ausgebildet, so dass die hierzu gemachten Ausführungen entsprechend gelten. Insbesondere weist jeder Schleifkontakt 12, 12' bzw. 12" einen eigenen Zustellmechanismus 14 auf.

Der Phasenleiterstrang 8 dient der Energieversorgung des verfahrbaren Verbrauchers und steht im Normalbetrieb unter Spannung, so dass Strom über die Schleiffläche 11 zu dem Schleifkontakt 12 fließt. Die oben beschriebene Ausbildung ist dem Fachmann grundsätzlich bekannt und Bedarf keiner weiteren Ausführungen.

Zusätzlich ist bei einem solchen Schleifleitungssystem 1 üblicherweise ein Erdungsleiterstrang 15 zur Verbindung des verfahrbaren elektrischen Verbrauchers mit dem Erdpotential des Schleifleitungssystems 1 vorgesehen. Der Erdungsleiterstrang 15 wird nachfolgend vor allem anhand der Detailzeichnung Fig. 2a beschrieben.

Der Erdungsleiterstrang 15 weist hierzu ein elektrisch leitendes Erdungsleiterprofil 16 auf, das von einem im wesentlichen U-förmigen Erdungsisolierprofil 17 mit einer in Fig. 2a nach unten offenen Kontaktöffnung 18 umgeben ist. Der Erdungsleiterstrang 15 ist mit einer Leiterstranghalterung 7''' wie die Phasenleiterstränge 8, 8', 8" an der Schleifleitung 6 befestigt. Wie in Fig. 1 bis 2a gut erkennbar, sind am Stromabnehmer 3 ein rechter Erdungsschleifkontakt 19 bzw. ein linker Erdungsschleifkontakt 20 sowie eine zwischen diesen angeordnete, elektrisch von den Erdungsschleifkontakten 19, 20 isolierte Antenne 21 vorgesehen, wobei die Antenne 21 eine Übertragungseinheit darstellt. Die Antenne 21 und die Erdungsschleifkontakte 19, 20 können über den Zustellmechanismus 14 angehoben und dadurch in Kontakt mit entsprechenden Erdungsschleifkontaktflächen 22 bzw. 23 des Erdungsleiterprofils 16 gebracht und gehalten werden, wie oben bereits beschrieben.

Das Erdungsleiterprofil 16 bildet zugleich eine Datenübertragungsvorrichtung mit einem als im wesentlichen T-förmigen Schlitzhohlleiter 24 ausgebildeten Hohlprofil. Der Schlitzhohlleiter 24 hat einen Hohlraum 25, der in eine rechte bzw. linke Schlitzwandung 26, 27 eines in den Zeichnungen nach unten geöffnetem Längsschlitzes 28 übergeht. Dabei weist der Längsschlitz 28 in die gleiche Richtung wie die nach unten offene Kontaktöffnung 18. Durch den Längsschlitz 28 kann die in Längsrichtung L ausgerichtete Antenne 21 in den Hohlraum 25 des Schlitzhohlleiters 24 eingreifen, um eine an sich bekannte berührungslose Datenübertragung zu ermöglichen.

Da im Normalbetrieb über die Erdungsschleifkontakte 22, 23 keine elektrische Leistung übertragen wird, besteht keine Gefahr, dass es zwischen Erdungsleiterprofil 16 und Erdungsschleifkontakten 22, 23 zu Funkenüberschlägen kommt, welche die Datenübertragung mittels des Schlitzhohlleiters 24 und der Antenne 21 nachteilig beeinflussen. Sofern doch größere Ströme fließen, handelt es sich um einen Notfall, bei dem das Schleifleitungssystem 1 schnell stillgesetzt werden soll.

Das Erdungsleiterprofil 16 und der Schlitzhohlleiter 24 sind vorliegend einstückig aus dem gleichen Material gefertigt und bilden somit eine Baueinheit, wodurch die Fertigung und der Einbau vereinfacht werden können. Erdungsleiterprofil 16 und Schlitzhohlleiter 21 können aber auch aus separaten Teilen und/oder unterschiedlichen Materialien gefertigt werden. Auch kann der Schlitzhohlleiter 24 einen anderen geeigneten Querschnitt aufweisen.

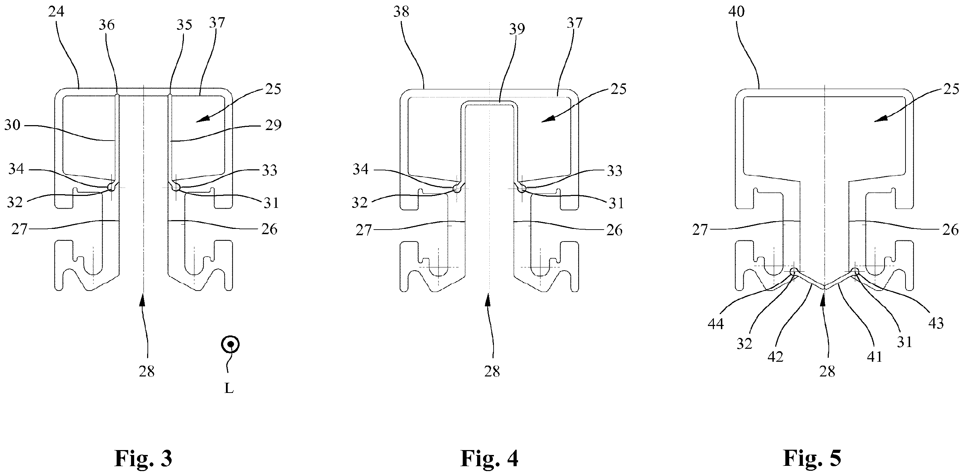

Um ein Eindringen und Ablagern von Schmutz und Feuchtigkeit in den Hohlraum 25 zu verhindern, sind bei der in Fig. 2a und im Detail in Fig. 3 gezeigten Ausgestaltung des Schlitzhohlleiters 24 am inneren, hohlraumseitigen Ende der Schlitzwandungen 26, 27 des Längsschlitzes 28 zwei Dichtleisten 29, 30 mit im Querschnitt kreisrund verdickten Befestigungskanten 31, 32 in einer rechten bzw. linken, entsprechend kreisförmigen Befestigungsnut 33, 34 angebracht. Durch diese verdickten Befestigungskanten 31, 32 können die Dichtleisten 29, 30 leicht in die Befestigungsnut 33, 34 eingesetzt und dennoch sicher darin gehalten werden.

Aus fertigungstechnischen Vorteilen sind die beiden Befestigungsnuten 33, 34 schräg von der Kante zwischen den Schlitzwandungen 26, 27 und den sich daran anschließenden Wandungen des Hohlraums 25 in den Schlitzhohlleiter 24 eingebracht. Die Dichtleisten 29, 30 knicken kurz nach ihren verdickten Befestigungskanten 31, 32 so ab, so dass sie parallel und in Verlängerung der Schlitzwandungen 26, 27 in den Hohlraum 25 hinein zu einer gegenüberliegenden oberen Wandung 37 des Schlitzhohlleiters 24 verlaufen.

Die vorderen, freien Enden der Dichtleisten 29, 30 kommen dann in Haltenuten 35, 36 in der oberen Wandung 37 zu liegen, um ihren geraden Verlauf zusätzlich zu stabilisieren und ihre Dichtfunktion zu verbessern.

Die in Fig. 4 gezeigte alternative Ausgestaltung einer Datenübertragungsvorrichtung in Form eines Schlitzhohlleiters 38 unterscheidet sich von der in Fig. 3 gezeigten Ausführung im wesentlichen durch die alternative Ausbildung des Dichtelements. Für gleiche oder sich entsprechende Teile werden deshalb die gleichen Bezugzeichen und Bezeichnungen verwendet, die obigen Ausführungen gelten entsprechend.

So wird anstelle der beiden getrennten Dichtleisten 29, 30 bei dem in Fig. 3 gezeigten Schlitzhohlleiter 38 lediglich ein längliches, durchgängiges, trogförmiges Dichtelement 39 verwendet. Das Dichtelement 39 ist mit seiner einen verdickten Befestigungskante 31 in der rechten Befestigungsnut 33 angebracht, wie bei der Ausführung in Fig. 2a und 3. Anschließend verläuft das Dichtelement 39 dann zunächst parallel und in Verlängerung der rechten Schlitzwandung 26 in den Hohlraum 25 hinein zu der gegenüberliegenden oberen Wandung 37 des Schlitzhohlleiters 38, biegt dann rechtwinklig in Richtung der anderen Schlitzwandung 27 ab und verläuft parallel zu der oberen Wandung 37. In Höhe der linken Schlitzwandung 27 biegt das Dichtelement 37 dann wieder weitgehend rechtwinklig in den Hohlraum 25 ab, so dass das Dichtelement 39 parallel und in Verlängerung der linken Schlitzwandung 27 auf diese zu verläuft. Das Dichtelement 39 ist dann auf dieser Seite wieder mit der verdickten Befestigungskante 32 in der Befestigungsnut 34 befestigt wie oben beschrieben. Vorteilhaft kann das Dichtelement 39 etwas weiter in den Hohlraum 25 ragen als die Antenne 21, so dass die der oberen Wandung 37 zugewandte Stirnseite der Antenne 21 nicht an dem Dichtelement 39 anstößt.

Bevorzugt ist das trogförmige Dichtelement 39 aus einem formstabilen, in gewissem Umfang elastischen, nicht elektrisch leitenden Material wie Hartgummi, Plastik oder einem anderen Kunststoffmaterial hergestellt.

Ggf. kann sich der Abstand der Dichtleisten 29, 30 bzw. der entsprechenden, sich gegenüberliegenden Teile des trogförmigen Dichtelements 39 in Richtung der oberen Wand 37 auch verjüngen. Bevorzugt ist dieser Abstand zumindest geringfügig größer ist als die Breite der Antenne 21, um deren Beweglichkeit sowohl beim Ein- und Ausfahren als auch beim Entlangbewegen in Längsrichtung L nicht einzuschränken.

Die in Fig. 5 gezeigte alternative Ausgestaltung einer Datenübertragungsvorrichtung in Form eines Schlitzhohlleiters 38 unterscheidet sich von der in Fig. 3 und 4 gezeigten Ausführung im wesentlichen durch die alternative Ausbildung der Dichtung. Für gleiche oder sich entsprechende Teile werden deshalb die gleichen Bezugzeichen und Bezeichnungen verwendet, die obigen Ausführungen gelten entsprechend.

So werden anstelle der in Fig. 3 gezeigten, in den Hohlraum reichenden Dichtleisten 29, 30 zwei am Eingang des Längsschlitzes 28 angeordnete Dichtlippen 41, 42 vorgesehen, die wiederum mit verdickten Befestigungskanten 31, 32 in Befestigungsnuten 43, 44 am Schlitzhohlleiter 40 befestigt sind. Dabei zeigen die Dichtlippen 41, 42 schräg vom Hohlraum 25 weg in Richtung der einzuführenden Antenne 21 und liegen bevorzugt in der Mittellinie des Längsschlitzes 28 mit ihren freien Enden abdichtend aneinander an. Hierdurch kann vorteilhaft das Eindringen von Schmutz und Feuchtigkeit bereits am Eingang des Längsschlitzes 28 verhindert werden, wobei zudem die Antenne 21 beim Eindringen in den Längsschlitz 28 durch die Dichtlippen 41, 42 gereinigt wird.

Bevorzugt sind die Dichtleisten 29, 30 bzw. Dichtlippen 41, 42 aus einem formstabilen, in gewissem Umfang elastischen, nicht elektrisch leitenden Material wie Hartgummi oder einem anderen Kunststoffmaterial hergestellt. Ggf. können die Dichtleisten bzw. Dichtlippen auch aus einem anderen Material hergestellt sein, z. B. aus einem Bürstenmaterial, welches einerseits eine ausreichende Dichtwirkung gegenüber Schmutz und Feuchtigkeit bietet und andererseits das Eingreifen der Antenne 21 in den Längsschlitz 28 ermöglicht und das Entlangbewegen der Antenne 21 in Längsrichtung L nicht zu stark behindert. Bekannt sind hierzu beispielsweise sog. Dichtbürsten.

Die oben beschriebene Befestigung der Dichtleisten 29, 30, des trogförmigen Dichtelements 39 oder der Dichtlippen 41, 42 mittels der verdickten Befestigungskanten 31, 32 an dem Schlitzhohlleiter 24, 38 bzw. 40 kann auch auf andere Weise erfolgen, sofern ein dauerhafter und fester Sitz der Dichtelemente am Schlitzhohlleiter 24, 38, bzw. 40 gewährleistet ist.

Um die Zuverlässigkeit des Schleifleitungssystems 1 weiter zu erhöhen, kann wie bei der in Fig. 1 gezeigten Ausführung vorgesehen werden, dass an einem weiteren Zustellmechanismus 14' eine weitere Antenne mit seitlichen Erdungsschleifkontakten 22' anzuordnen. Hierdurch kann eine Unterbrechung, z.B. durch eine thermisch getrennte Verbindungsstelle des nicht aus Endlosmaterial gebildeten Erdungsleiterprofils 16 und Schlitzhohlleiters 24 überbrückt werden, ohne die Datenübertragung zu unterbrechen.

Vorteilhaft kann der Längsschlitz 28 auch in anderen Richtungen als nach unten weisen, wie in den Zeichnungen dargestellt, da die Dichtelemente 29, 30, 39 bzw. 41, 42 nun das Eindringen von Feuchtigkeit bzw. Schmutz in den Hohlraum 25 verhindern.

Weiter kann anstelle der oben beschriebenen unterschiedlichen Schlitzhohlleiter 24, 38 bzw. 40 auch eine andere Art der Datenübertragung vorgesehen werden, bei der in einem länglichen Hohlprofil mit einem in eine Längsrichtung des Hohlprofils verlaufenden Hohlraum und einem in Längsrichtung verlaufenden Längsschlitz eine gegenüber dem Hohlraum bewegbare Übertragungseinheit vorgesehen ist, die zumindest zum Teil in den Längsschlitz eindringt.

Anstelle des oben beschriebenen und in den Figuren gezeigten Hohlprofils kann dieses auch andere Querschnittsformen aufweisen, z. B. eine runden oder mehreckigen Hohlraum.

### Bezugszeichen

- 1: Schleifleitungssystem
- 2: Schienenstrang
- 3: Stromabnehmer
- 4: Laufrollen
- 5: Schleifleitungshalterungen
- 6: Schleifleitung
- 7, 7', 7": Leiterstranghalterungen
- 8, 8', 8": Phasenleiterstränge
- 9: Isolierprofil
- 10: Phasenleiterprofil
- 11: Schleiffläche Phasenleiterstrang
- 12, 12', 12": Schleifkontakt
- 13: Schleifkontaktträger
- 14: Zustellmechanismus
- 15: Erdungsleiterstrang
- 16: Erdungsleiterprofil
- 17: Erdungsisolierprofil
- 18: Kontaktöffnung Erdungsisolierprofil
- 19: rechter Erdungsschleifkontakt
- 20: linker Erdungsschleifkontakt
- 21: Antenne
- 22: rechte Erdungsschleifkontaktfläche
- 23: linke Erdungsschleifkontaktfläche
- 24: Schlitzhohlleiter
- 25: Hohlraum Schlitzhohlleiter
- 26: rechte Schlitzwandung
- 27: linke Schlitzwandung
- 28: Längsschlitz
- 29: rechte Dichtleiste
- 30: linke Dichtleiste
- 31: rechte verdickte Befestigungskante
- 32: linke verdickte Befestigungskante
- 33: rechte Befestigungsnut
- 34: linke Befestigungsnut
- 35: rechte Haltenut für Dichtleiste
- 36: linke Haltenut für Dichtleiste
- 37: obere Wandung des Schlitzholleiters
- 38: alternativer Schlitzhohlleiter
- 39: trogförmiges Dichtelement
- 40: alternativer Schlitzhohlleiter
- 41: rechte Dichtlippe
- 42: linke Dichtlippe
- 43: rechte Befestigungsnut für Dichtlippe
- 44: linke Befestigungsnut für Dichtlippe

- L: Längsrichtung Schleifleitung

## Patentansprüche

1. Datenübertragungsvorrichtung mit einem länglichen Hohlprofil (40) mit einem in eine Längsrichtung (L) des Hohlprofils (40) verlaufenden Hohlraum (25), wobei das Hohlprofil (40) einen in Längsrichtung (L) verlaufenden Längsschlitz (28) für eine gegenüber dem Hohlraum (25) zumindest in Längsrichtung (L) bewegbare, zumindest teilweise in den Längsschlitz (28) eindringende Übertragungseinheit (21) aufweist, wobei das längliche Hohlprofil (40) ein Schlitzhohleiter (40) und die Übertragungseinheit eine Antenne (21) ist, wobei mindestens ein längs des Hohlprofils (40) verlaufendes Dichtelement (41, 42) zur Abdichtung zumindest eines Teils des Hohlraums (25) vorgesehen ist, **dadurch gekennzeichnet, dass** auf einander gegenüberliegenden Seiten (26, 27) des Längsschlitzes (28) jeweils ein Dichtelement (41, 42) an dem Hohlprofil (40) angeordnet ist, wobei die Dichtelemente (41, 42) als Dichtlippen ausgebildet sind, wobei zum Verhindern des Eindringens von Schmutz und Feuchtigkeit bereits am Eingang des Längsschlitzes (28) und zum Reinigen der Antenne (21) beim Eindringen in den Längsschlitz (28) durch die Dichtlippen (41, 42)
- die Dichtlippen (41, 42) am Eingang des Längsschlitzes (28) angeordnet sind, so dass auch der Längsschlitz (28) gegenüber der Außenumgebung abgedichtet ist,
- die Dichtlippen (41, 42) jeweils eine im Querschnitt stellenweise verdickte Befestigungskante (31, 32) zur Halterung in einer entsprechend geformten Befestigungsnut (33, 34) des Hohlprofils (24, 38; 40) aufweisen,
- die Dichtlippen (41, 42) schräg vom Hohlraum (25) weg in Richtung der einzuführenden Antenne (21) zeigen, und wobei sich freie, in oder über den Längsschlitz (28) ragende Enden der Dichtelemente (41, 42), bevorzugt in der Mittellinie des Längsschlitzes (28), abdichtend berühren.

2. Datenübertragungsvorrichtung mit einem länglichen Hohlprofil (38) mit einem in eine Längsrichtung (L) des Hohlprofils (38) verlaufenden Hohlraum (25), wobei das Hohlprofil (38) einen in Längsrichtung (L) verlaufenden Längsschlitz (28) für eine gegenüber dem Hohlraum (25) zumindest in Längsrichtung (L) bewegbare, zumindest teilweise in den Längsschlitz (28) eindringende Übertragungseinheit (21) aufweist, wobei ein längs des Hohlprofils (38) verlaufendes längliches, durchgängiges, trogförmiges Dichtelement (39) zur Abdichtung zumindest eines Teils des Hohlraums (25) vorgesehen ist, wobei das Dichtelement (39) auf beiden Seiten des Längsschlitzes (28) befestigt ist, wobei das Dichtelement (39) über die gesamte Breite des Längsschlitzes (28) reicht, und wobei das Dichtelement (39) in den Hohlraum (25) weist, **dadurch gekennzeichnet, dass** das Dichtelement (39) in Verlängerung von Schlitzwandungen (26, 27) des Längsschlitzes (28) in den Hohlraum (25) hinein verläuft.

3. Datenübertragungsvorrichtung mit einem länglichen Hohlprofil (24) mit einem in eine Längsrichtung (L) des Hohlprofils (24) verlaufenden Hohlraum (25), wobei das Hohlprofil (24) einen in Längsrichtung (L) verlaufenden Längsschlitz (28) für eine gegenüber dem Hohlraum (25) zumindest in Längsrichtung (L) bewegbare, zumindest teilweise in den Längsschlitz (28) eindringende Übertragungseinheit (21) aufweist, wobei zwei längs des Hohlprofils (24) verlaufende Dichtelemente (29, 30) zur Abdichtung zumindest eines Teils des Hohlraums (25) vorgesehen sind, **dadurch gekennzeichnet, dass** die Dichtelemente (29, 30) am Übergang zwischen Hohlraum (25) und Längsschlitz (28) angeordnet sind, wobei die Dichtelemente (29, 30) in Verlängerung von Schlitzwandungen (26, 27) des Längsschlitzes (28) in den Hohlraum (25) hinein verlaufen, und wobei an einer dem Längsschlitz (28) gegenüberliegenden Wandung (37) des Hohlraums (25) Haltenuten (35, 36) zur Aufnahme von freien Enden der Dichtelemente (29, 30) vorgesehen sind, und wobei die Dichtelemente (29, 30) jeweils eine im Querschnitt stellenweise verdickte Befestigungskante (31, 32) zur Halterung in einer entsprechend geformten Befestigungsnut (33, 34) des Hohlprofils (24, 38; 40) aufweisen.

4. Datenübertragungsvorrichtung nach Anspruch 3, wobei auf einander gegenüberliegenden Seiten (26, 27) des Längsschlitzes (28) jeweils ein Dichtelement (29, 30) an dem Hohlprofil (24) angeordnet ist.

5. Datenübertragungsvorrichtung nach einem der Ansprüche 3 oder 4, wobei die Dichtelemente (29, 30) in den Hohlraum (25) weisen.

6. Datenübertragungsvorrichtung nach Anspruch 2, wobei das Dichtelement (39) am Übergang zwischen Hohlraum (25) und Längsschlitz (28) angeordnet ist.

7. Datenübertragungsvorrichtung nach Anspruch 1 oder 2, wobei das oder die Dichtelemente (; 39; 41, 42) jeweils eine im Querschnitt stellenweise verdickte Befestigungskante (31, 32) zur Halterung in einer entsprechend geformten Befestigungsnut (33, 34) des Hohlprofils (24, 38; 40) aufweisen.

8. Datenübertragungsvorrichtung nach Anspruch 3 bis 7, wobei die verdickte Befestigungskante (31, 32) im Querschnitt kreisrund, oval, schwalbenschwanz-, trichter- oder keilförmig geformt ist.

9. Schleifleitung (6) zur Versorgung mindestens eines an der Schleifleitung (6) in deren Längsrichtung (L) verfahrbaren elektrischen Verbrauchers mit elektrischer Energie, mit mindestens einem in Längsrichtung (L) verlaufenden Leiterstrang (15) mit einem elektrisch leitenden Leiterprofil (10, 16) zur Kontaktierung mit einem Schleifkontakt (22, 23) des Verbrauchers und mit mindestens einer in Längsrichtung (L) verlaufenden Datenübertragungsvorrichtung, wobei die Datenübertragungsvorrichtung nach einem der voranstehenden Ansprüche ausgebildet ist.

10. Schleifleitungssystem (1) mit einer Schleifleitung (6) nach Anspruch 9, mit mindestens einem an der Schleifleitung (6) in deren Längsrichtung (L) verfahrbaren elektrischen Verbraucher, der einen Stromabnehmer (3) mit mindestens einem Schleifkontakt (22, 23) zur Kontaktierung mit mindestens einem elektrischen leitenden Leiterprofil (10, 16) der Schleifleitung (6) aufweist, und der eine Übertragungseinheit (21) zur Datenübertragung mit der Datenübertragungsvorrichtung der Schleifleitung (6) aufweist.

## Claims

1. Data transmission device with an elongated hollow profile (40) with a hollow space (25) running in a longitudinal direction (L) of the hollow profile (40), wherein the hollow profile (40) has a longitudinal slot (28) running in longitudinal direction (L) for a transmission unit (21) which is movable at least in longitudinal direction (L) with respect to the hollow space (25) and penetrates at least partly into the longitudinal slot (28), wherein the elongated hollow profile (40) is a slotted hollow conductor (40) and the transmission unit an antenna (21), wherein at least one sealing element (41, 42) running along the hollow profile (40) is provided to seal off at least a part of the hollow space (25), **characterised in that** respectively a sealing element (41, 42) is arranged on the hollow profile (40) on sides (26, 27) of the longitudinal slot (28) opposite one another, wherein the sealing elements (41, 42) are configured in the form of sealing lips, whereby for preventing dirt and moisture from entering already at the inlet of the longitudinal slot (28) and for cleaning the antenna (21) by the sealing lips (41, 42) as it is being inserted into the longitudinal slot (28)
- the sealing lips (41, 42) are arranged at the entrance to the longitudinal slot (28) so that the longitudinal slot (28) is also sealed off with respect to the external environment,
- the sealing lips (41, 42) have respectively an attachment edge (31, 32) with thickened cross-section in places for retention in a correspondingly shaped attachment groove (33, 34) of the hollow profile (24, 38; 40),
- the sealing lips (41, 42) point obliquely away from the hollow space (25) in the direction of the antenna (21) to be inserted, and wherein free ends of the sealing elements (41, 42) projecting into or beyond the longitudinal slot (28) rest in sealed fashion against one another preferably in the center line of the longitudinal slot (28).

2. Data transmission device with an elongated hollow profile (38) with a hollow space (25) running in a longitudinal direction (L) of the hollow profile (38), wherein the hollow profile (38) has a longitudinal slot (28) running in longitudinal direction (L) for a transmission unit (21) which is movable at least in longitudinal direction (L) with respect to the hollow space (25) and penetrates at least partly into the longitudinal slot (28), wherein an elongated, continuous, trough-like sealing element (39) running along the hollow profile (38) is provided to seal off at least a part of the hollow space (25), wherein the sealing element (39) is attached on both sides of the longitudinal slot (28), wherein the sealing element (39) extends over the entire width of the longitudinal slot (28), and wherein the sealing element (39) points into the hollow space (25), **characterised in that** the sealing element (39) runs into the hollow space (25) as an extension of slot walls (26, 27) of the longitudinal slot (28).

3. Data transmission device with an elongated hollow profile (24) with a hollow space (25) running in a longitudinal direction (L) of the hollow profile (24), wherein the hollow profile (24) has a longitudinal slot (28) running in longitudinal direction (L) for a transmission unit (21) which is movable at least in longitudinal direction (L) with respect to the hollow space (25) and penetrates at least partly into the longitudinal slot (28), wherein two sealing elements (29, 30) running along the hollow profile (24) are provided to seal off at least a part of the hollow space (25), **characterised in that** the sealing elements (29, 30) are arranged at the transition between hollow space (25) and longitudinal slot (28), wherein the sealing elements (29, 30) run into the hollow space (25) as an extension of slot walls (26, 27) of the longitudinal slot (28), and wherein retaining grooves (35, 36) for receiving free ends of the sealing elements (29, 30) are provided on a wall (37) of the hollow space (25) opposite the longitudinal slot (28), and wherein the sealing elements (41, 42) have respectively an attachment edge (31, 32) with thickened cross-section in places for retention in a correspondingly shaped attachment groove (33, 34) of the hollow profile (24, 38; 40).

4. Data transmission device according to claim 3, wherein respectively a sealing element (29, 30) is arranged on the hollow profile (24) on sides (26, 27) of the longitudinal slot (28) opposite one another.

5. Data transmission device according to one of claims 3 or 4, wherein the sealing elements (29, 30) point into the hollow space (25).

6. Data transmission device according to claim 2, wherein the sealing element (39) is arranged at the transition between hollow space (25) and longitudinal slot (28).

7. Data transmission device according to claims 1 or 2, wherein the sealing element or elements (39; 41, 42) have respectively an attachment edge (31, 32) with thickened cross-section in places for retention in a correspondingly shaped attachment groove (33, 34) of the hollow profile (24, 38; 40).

8. Data transmission device according to claim 3 to 7, wherein the thickened attachment edge (31, 32) is shaped to be circular, oval, dovetail-shaped, funnel-shaped or wedge-shaped in cross-section.

9. Conductor rail (6) for supplying with electrical energy at least one electrical load which is movable on the conductor rail (6) in its longitudinal direction (L), with at least one conductor strand (15) running in longitudinal direction (L) with an electrically conductive conductor profile (10, 16) for making contact with a sliding contact (22, 23) of the load and with at least one data transmission device running in longitudinal direction (L), wherein the data transmission device is designed according to one of the preceding claims.

10. Conductor rail system (1) with a conductor rail (6) according to claim 9, with at least one electrical load which is movable on the conductor rail (6) in its longitudinal direction (L) and has a current collector (3) with at least one sliding contact (22, 23) for making contact with at least one electrically conductive conductor profile (10, 16) of the conductor rail (6), and which has a transmission unit (21) for data transmission using the data transmission device of the conductor rail (6).

## Revendications

1. Dispositif de transmission de données avec un profil creux (40) allongé avec un espace creux (25) s'étendant dans un sens longitudinal (L) du profil creux (40), dans lequel le profil creux (40) présente une entaille longitudinale (28) s'étendant dans le sens longitudinal (L) pour une unité de transmission (21) pouvant être déplacée par rapport à l'espace creux (25) au moins dans le sens longitudinal (L), pénétrant au moins en partie dans l'entaille longitudinale (28), dans lequel le profil creux (40) allongé est un conducteur creux à entaille (40) et l'unité de transmission est une antenne (21), dans lequel au moins un élément étanche (41, 42) s'étendant le long du profil creux (40) est prévu pour étanchéifier au moins une partie de l'espace creux (25), **caractérisé en ce que** respectivement un élément étanche (41, 42) est disposé sur le profil creux (40) sur des côtés se faisant face les uns les autres (26, 27) de l'entaille longitudinale (28), dans lequel les éléments étanches (41, 42) sont réalisés en tant que lèvres étanches, dans lequel pour empêcher la pénétration de saleté et d'humidité déjà à l'entrée de l'entaille longitudinale (28) et pour nettoyer l'antenne (21) lors de la pénétration dans l'entaille longitudinale (28) par les lèvres étanches (41, 42),
- les lèvres étanches (41, 42) sont disposées sur l'entrée de l'entaille longitudinale (28) de telle sorte que l'entaille longitudinale (28) également est étanchéifiée par rapport à l'environnement extérieur,
- les lèvres étanches (41, 42) présentent respectivement une arête de fixation (31, 32) épaissie par endroits dans la section transversale, destinée au maintien dans une rainure de fixation (33, 34) façonnée de manière correspondante du profil creux (24, 38 ; 40),
- les lèvres étanches (41, 42) pointent à l'oblique de manière à s'éloigner de l'espace creux (25) en direction de l'antenne (21) à introduire, et dans lequel des extrémités libres, dépassant dans ou au-delà de l'entaille longitudinale (28), des éléments étanches (41, 42) se touchent de manière à étanchéifier de manière préférée dans la ligne médiane de l'entaille longitudinale (28).

2. Dispositif de transmission de données avec un profil creux (38) allongé avec un espace creux (25) s'étendant dans un sens longitudinal (L) du profil creux (38), dans lequel le profil creux (38) présente une entaille longitudinale (28) s'étendant dans le sens longitudinal (L) pour une unité de transmission (21) pouvant être déplacée par rapport à l'espace creux (25) au moins dans le sens longitudinal (L), pénétrant au moins en partie dans l'entaille longitudinale (28), dans lequel un élément étanche (39) en forme d'auge, traversant, allongé s'étendant le long du profil creux (38) est prévu pour étanchéifier au moins une partie de l'espace creux (25), dans lequel l'élément étanche (39) est fixé sur les deux côtés de l'entaille longitudinale (28), dans lequel l'élément étanche (39) va au-delà de la largeur totale de l'entaille longitudinale (28), et dans lequel l'élément étanche (39) pointe dans l'espace creux (25), **caractérisé en ce que** l'élément étanche (39) s'étend à l'intérieur de l'espace creux (25) dans le prolongement de parois entaillées (26, 27) de l'entaille longitudinale (28).

3. Dispositif de transmission de données avec un profil creux (24) allongé avec un espace creux (25) s'étendant dans un sens longitudinal (L) du profil creux (24), dans lequel le profil creux (24) présente une entaille longitudinale (28) s'étendant dans le sens longitudinal (L) pour une unité de transmission (21) pouvant être déplacée par rapport à l'espace creux (25) au moins dans le sens longitudinal (L), pénétrant au moins en partie dans l'entaille longitudinale (28), dans lequel deux éléments étanches (29, 30) s'étendant le long du profil creux (24) sont prévus pour étanchéifier au moins une partie de l'espace creux (25), **caractérisé en ce que** les éléments étanches (29, 30) sont disposés sur le passage entre l'espace creux (25) et l'entaille longitudinale (28), dans lequel les éléments étanches (29, 30) s'étendent à l'intérieur de l'espace creux (25) dans le prolongement de parois entaillées (26, 27) de l'entaille longitudinale (28), et dans lequel des rainures de maintien (35, 36) servant à loger des extrémités libres des éléments étanches (29, 30) sont prévues sur une paroi (37), faisant face à l'entaille longitudinale (28), de l'espace creux (25), et dans lequel les éléments étanches (29, 30) présentent respectivement une arête de fixation (31, 32) épaissie par endroits dans la section transversale pour le maintien dans une rainure de fixation (33, 34) façonnée de manière correspondante du profil creux (24, 28 ; 40).

4. Dispositif de transmission de données selon la revendication 3, dans lequel respectivement un élément étanche (29, 30) est disposé sur le profil creux (24) sur des côtés (26, 27) se faisant face les uns les autres de l'entaille longitudinale (28).

5. Dispositif de transmission de données selon l'une quelconque des revendications 3 ou 4, dans lequel les éléments étanches (29, 30) pointent dans l'espace creux (25).

6. Dispositif de transmission de données selon la revendication 2, dans lequel l'élément étanche (39) est disposé sur le passage entre l'espace creux (25) et l'entaille longitudinale (28).

7. Dispositif de transmission de données selon la revendication 1 ou 2, dans lequel l'élément étanche ou les éléments étanches (39 ; 41, 42) présentent respectivement une arête de fixation (31, 32) épaissie par endroits dans la section transversale pour le maintien dans une rainure de fixation (33, 34) façonnée de manière correspondante du profil creux (24, 38 ; 40).

8. Dispositif de transmission de données selon la revendication 3 à 7, dans lequel l'arête de fixation (31, 32) épaissie est façonnée dans la section transversale de manière ronde circulaire, de manière ovale, en queue-d'aronde, en forme d'entonnoir ou en forme de coin.

9. Ligne de contact (6) pour alimenter au moins un consommateur électrique pouvant être déplacé sur la ligne de contact (6) dans son sens longitudinal (L) en énergie électrique, avec au moins une corde conductrice (15) s'étendant dans le sens longitudinal (L) avec un profil conducteur (10, 16) électriquement conducteur pour établir un contact avec un contact glissant (22, 23) du consommateur et avec au moins un dispositif de transmission de données s'étendant dans le sens longitudinal (L), dans lequel le dispositif de transmission de données est réalisé selon l'une quelconque des revendications précédentes.

10. Système de ligne de contact (1) avec une ligne de contact (6) selon la revendication 9, avec au moins un consommateur électrique pouvant être déplacé sur la ligne de contact (6) dans son sens longitudinal (L), qui présente un collecteur de courant (3) avec au moins un contact glissant (22, 23) pour établir un contact avec au moins un profil conducteur (10, 16) électriquement conducteur de la ligne de contact (6) et qui présente une unité de transmission (21) pour la transmission de données avec le dispositif de transmission de données de la ligne de contact (6).
